# EUROPEAN PATENT APPLICATION

(11) **EP 4 656 429 A1**
(43) Date of publication of application: **03.12.2025**
(21) Application number: 25177128.3
(22) Date of filing: 16.05.2025
(51) Int. Cl.: B60K 1/04

(54) **BATTERY ELECTRIC VEHICLE**

(30) Priority: 27.05.2024 JP 2024085603
(71) Applicant: TOYOTA JIDOSHA KABUSHIKI KAISHA, Toyota-shi, Aichi-ken 471-8571 (JP)
(72) Inventor: ICHIKAWA, Akitaka, TOYOTA-SHI, AICHI-KEN, 471-8571 (JP)
(74) Representative: Cabinet Beau de Loménie

(57) **Abstract**

A battery electric vehicle includes a battery and an electric device operates using the electricity stored in the battery. The battery includes an intermediate section, a front section, and a rear section. The intermediate section houses battery cells and is disposed between a driver's seat and a front passenger seat so as to extend from a front end to a rear end of a passenger compartment. The front section is disposed forward of the intermediate section and is filled with battery cells. The rear section is disposed rearward of the intermediate section, the driver's seat, and the front passenger seat. Battery cells are stacked in the rear section so as to be higher than the intermediate section. The electric device is disposed above the front section. An upper end of the rear section is positioned higher than the electric device.

## Description

### CROSS-REFERENCE TO RELATED APPLICATIONS

This application is based upon and claims the benefit of priority from Japanese Patent Application No. 2024-085603, filed on May 27, 2024, the entire contents of which are incorporated herein by reference and to which the person of the art can refer when considering the present disclosure.

### BACKGROUND

### 1. Field

The present disclosure relates to a battery electric vehicle.

### 2. Description of Related Art

Japanese Laid-Open Patent Publication No. 2023-520139 discloses a battery electric vehicle. In this battery electric vehicle, a battery is disposed between a driver's seat and a front passenger seat.

There is a demand for battery electric vehicles of the sports car type. To achieve proportions suitable for a sports car in a battery electric vehicle, there is room for design improvements in the layout of multiple components, including the battery.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a battery electric vehicle includes a battery, a drive wheel configured to be driven by electricity stored in the battery, an electric device configured to operate using the electricity stored in the battery, a passenger compartment, and a driver's seat and a front passenger seat installed in the passenger compartment. The battery includes an intermediate section that houses multiple battery cells and is disposed between the driver's seat and the front passenger seat so as to extend from a front end to a rear end of the passenger compartment, a front section that is disposed forward of the intermediate section and is filled with multiple battery cells, and a rear section disposed rearward of the intermediate section, the driver's seat, and the front passenger seat. Multiple battery cells are stacked in the rear section so as to be higher than the intermediate section. The electric device is disposed above the front section. An upper end of the rear section is positioned higher than the electric device.

Other features and aspects will be apparent from the following detailed description, the drawings, and the claims.

### BRIEF DESCRIPTION OF THE DRAWINGS

Fig. 1 is a schematic diagram of a battery electric vehicle according to an embodiment, illustrating an arrangement of a battery and multiple components around the battery when the battery electric vehicle is viewed from above.
Fig. 2 is a schematic diagram of the battery electric vehicle shown in Fig. 1, illustrating the arrangement of the battery and the components around the battery when the battery electric vehicle is viewed from the side.
Fig. 3 is a schematic diagram illustrating an arrangement of brake discs and brake calipers provided in the battery electric vehicle shown in Fig. 1.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

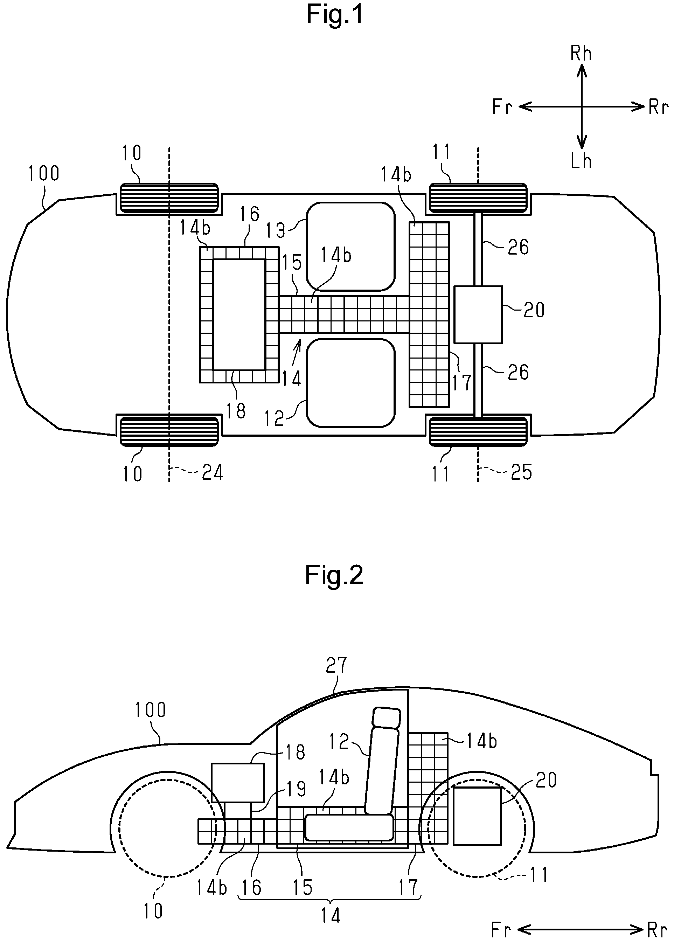

A battery electric vehicle 100 according to an embodiment will now be described with reference to Figs. 1 to 3.

In the following description, terms related to orientations or directions, such as "front", "rear", "upper", "lower", "right", and "left", are defined based on the battery electric vehicle 100.

In Figs. 1 to 3, "Fr" indicates the front direction of the battery electric vehicle 100. In Figs. 1 to 3, "Rr" indicates the rear direction of the battery electric vehicle 100. In Fig. 1, "Rh" indicates the right side as viewed from an occupant facing forward in the battery electric vehicle 100. In Fig. 1, "Lh" indicates the left side as viewed from an occupant facing forward in the battery electric vehicle 100.

### Arrangement of the Battery 14 and the Power Supply Device 18 in the Battery Electric Vehicle 100

Fig. 1 shows an arrangement of a battery 14 and components around the battery 14 when the battery electric vehicle 100 is viewed from above. Fig. 2 shows the arrangement of the battery 14 and the components around the battery 14 when the battery electric vehicle 100 is viewed from the left side in Fig. 1. Hereinafter, the arrangement of multiple components included in the battery electric vehicle 100 will be described with reference to Figs. 1 and 2.

As shown in Fig. 1, the battery electric vehicle 100 includes the battery 14. The battery 14 houses multiple battery cells 14b. The battery 14 stores electricity in the battery cells 14b.

The battery 14 includes an intermediate section 15, a front section 16, and a rear section 17.

As shown in Figs. 1 and 2, the intermediate section 15 is disposed between a driver's seat 12 and a front passenger seat 13 so as to extend from a front end to a rear end of a passenger compartment 27. The intermediate section 15 houses a portion of the battery cells 14b. The battery cells 14b are stacked.

As shown in Fig. 1, the front section 16 is disposed forward of the intermediate section 15. The front section 16 is filled with a portion of the battery cells 14b. The front section 16 houses the battery cells 14b. The battery cells 14b are stacked.

As shown in Fig. 1, the rear section 17 is disposed rearward of the intermediate section 15, the driver's seat 12, and the front passenger seat 13. As shown in Fig. 2, an upper end of the rear section 17 is positioned higher than an upper end of the intermediate section 15. The rear section 17 houses a portions of the battery cells 14b. The battery cells 14b are stacked. The battery cells 14b are stacked so as to be higher than the intermediate section 15.

As described above, in the battery electric vehicle 100, the battery cells 14b are arranged in a distributed manner in the intermediate section 15, the front section 16, and the rear section 17.

The battery electric vehicle 100 includes an electric device. The electric device operates using the electricity stored in the battery 14.

In the present embodiment, the electric device is the power supply device 18. Multiple devices on the battery electric vehicle 100 are connected to the power supply device 18. For example, the power supply device 18 is connected to lighting systems, a monitor for a car navigation system, and various electronic control units. The power supply device 18 distributes and supplies the power from the battery 14 to each device connected to the power supply device 18. The power supply device 18 may convert the power in the battery 14 and then supply the power to each device. The power supply device 18 may charge the battery 14 with power supplied from the outside.

As shown in Figs. 1 and 2, the power supply device 18 is disposed above the front section 16. As shown in Fig. 2, an upper end of the rear section 17 is positioned higher than the power supply device 18. The rear section 17 has a portion of the battery cells 14b that are stacked so as to be higher than the front section 16.

The number of the battery cells 14b included in the rear section 17 is larger than the number of the battery cells 14b included in the front section 16. As the number of the battery cells 14b included in the battery 14 increases, the battery 14 becomes heavier. Accordingly, the rear section 17 is heavier than the front section 16.

Behind the driver's seat 12 and the front passenger seat 13, the battery cells 14b are stacked higher than those in the intermediate section 15 and the front section 16. The power supply device 18 is disposed in the space above the front section 16, which has a relatively low height. This structure suppresses an increase in the height of a portion of the battery electric vehicle 100 that is located forward of the driver's seat 12 and the front passenger seat 13.

As shown in Fig. 2, the battery electric vehicle 100 includes a connector 19 between the front section 16 and the power supply device 18. The connector 19 connects the battery 14 to the power supply device 18, for example, and relays the power from the battery 14 to the power supply device 18.

### Relationship of the Battery 14 and the Power Supply Device 18 with the Wheels of Battery Electric Vehicle 100

Fig. 1 shows a front wheel rotation axis 24 and a rear wheel rotation axis 25. The front wheel rotation axis 24 is a rotation axis of front wheels 10. The rear wheel rotation axis 25 is a rotation axis of rear wheels 11.

As shown in Fig. 1, the front section 16 is disposed rearward of the front wheel rotation axis 24. As shown in Fig. 1, the rear section 17 is disposed forward of the rear wheel rotation axis 25. In this manner, the battery 14 is disposed between the front wheel rotation axis 24 and the rear wheel rotation axis 25.

### Arrangement of the Drive Unit 20 in the Battery Electric Vehicle 100

As shown in Figs. 1 and 2, the battery electric vehicle 100 includes a drive unit 20 located rearward of the rear section 17. The drive unit 20 includes a motor and a speed reducer.

The motor of the drive unit 20 generates rotational output using the power supplied from the battery 14.

The speed reducer of the drive unit 20 is connected to a drive shaft 26. The speed reducer transmits the rotational output from the motor to the drive shaft 26 after reducing the rotational speed. When the rotational output from the motor is transmitted to the drive shaft 26, the rear wheels 11, which are connected to the drive shaft 26, rotate. In the battery electric vehicle 100, the rear wheels 11 are drive wheels.

Accordingly, the drive unit 20 rotates the drive wheels using the power supplied from the battery 14.

### Arrangement of the Brake Calipers 23 in the Battery Electric Vehicle 100

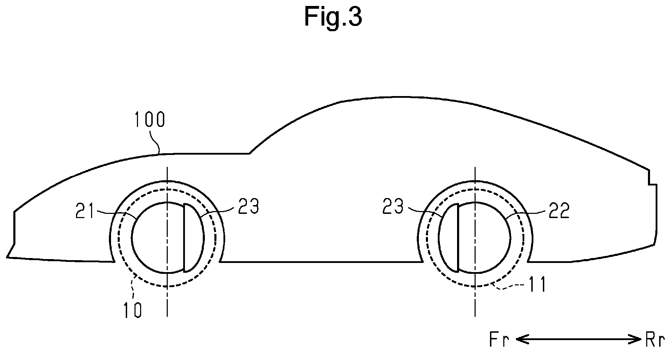

Fig. 3 shows the arrangement of brake discs and brake calipers 23 when the battery electric vehicle 100 is viewed from the left side in Fig. 1. As shown in Fig. 3, each of the front wheels 10 and the rear wheels 11 is provided with a brake caliper 23.

In Fig. 3, the long-dash short-dash line on the front wheel 10 represents the position of the center of the front wheel 10 in the vehicle longitudinal direction when the battery electric vehicle 100 is viewed from the left side in Fig. 1. As shown in Fig. 3, the brake caliper 23 is disposed rearward of the long-dash short-dash line on the front wheel 10. That is, the brake caliper 23 installed on the front wheel 10 is disposed at a rear portion of the front brake disc 21.

In Fig. 3, the long-dash short-dash line on the rear wheel 11 represents the position of the center of the rear wheel 11 in the vehicle longitudinal direction when the battery electric vehicle 100 is viewed from the left side in Fig. 1. As shown in Fig. 3, the brake caliper 23 is disposed forward of the long-dash short-dash line on the rear wheel 11. That is, the brake caliper 23 installed on the rear wheel 11 is disposed at a front portion of the rear brake disc 22.

### Operation of the Present Embodiment

In the above-described battery electric vehicle 100, the battery cells 14b are arranged in a distributed manner in the intermediate section 15, the front section 16, and the rear section 17. The intermediate section 15 is disposed between the driver's seat 12 and the front passenger seat 13. The front section 16 is disposed forward of the driver's seat 12 and the front passenger seat 13. The rear section 17 is disposed rearward of the driver's seat 12 and the front passenger seat 13. As a result, the seating position is lower than in a configuration in which the battery 14 is mounted beneath the floor of the driver's seat 12 and the front passenger seat 13. While the battery cells 14b are stacked relatively high behind the driver's seat 12 and the front passenger seat 13, the electric device is arranged in the space above the front section 16. This configuration ensures a sufficient capacity of the battery 14 while also lowering the height of the portion positioned forward of the driver's seat 12 and the front passenger seat 13.

### Advantages of the Present Embodiment

(1) The above-described battery electric vehicle 100 achieves proportions suitable for a sports car while ensuring a sufficient capacity of the battery 14 by improving the layout of the battery cells 14b and the electric device.
(2) The electric device is the power supply device 18. The power supply device 18 distributes and supplies the power from the battery 14 to each device connected to the power supply device 18.
(3) Each of the front wheels 10 and the rear wheels 11 is provided with a brake caliper 23. The brake caliper 23 installed on the front wheel 10 is disposed at a rear portion of the front brake disc 21. The brake caliper 23 installed on the rear wheel 11 is disposed at a front portion of the rear brake disc 22.
   If the brake caliper 23 is located outside the region between the rotation axis of the front wheel 10 and the rotation axis of the rear wheel 11, the brake caliper 23 will be located farther from the center of gravity of the battery electric vehicle 100. When multiple components are mounted at positions farther from the center of gravity, and their mass is distributed away from the center of gravity, the responsiveness of the battery electric vehicle 100 during turning decreases. In contrast, when multiple components are mounted closer to the center of gravity, and their mass is concentrated near the center of gravity, the responsiveness of the battery electric vehicle 100 during turning improves. In the present embodiment, the brake calipers 23 are disposed between the rotation axis of the front wheels 10 and the rotation axis of the rear wheels 11 so that the brake calipers 23 are as close to the center of gravity of the battery electric vehicle 100 as possible. As a result, the battery electric vehicle 100 has an improved responsiveness during turning.
(4) The front section 16 is disposed rearward of the rotation axis of the front wheels 10. The rear section 17 is disposed forward of the rotation axis of the rear wheels 11.
   The battery 14, which is a heavy component, is disposed between the rotation axis of the front wheels 10 and the rotation axis of the rear wheels 11. The battery 14 is not present in any location outside the region between the rotation axis of the front wheels 10 and the rotation axis of the rear wheels 11. As a result, the driving performance of the battery electric vehicle 100 is improved.
(5) The rear wheels 11 are drive wheels. The number of the battery cells 14b included in the rear section 17 is larger than the number of the battery cells 14b included in the front section 16.

The battery 14 is a heavy component and becomes heavier as the number of the battery cells 14b included therein increases. In the battery electric vehicle 100, which is driven by the rear wheels 11, a greater rearward weight distribution increases the traction applied to the rear wheels 11 during acceleration. The battery electric vehicle 100 is configured such that the rear wheels 11 are driven, and the rear section 17 is heavier than the front section 16. This configuration allows the battery electric vehicle 100 to achieve high acceleration performance.

### Modifications

The above-described embodiment may be modified as follows. The above-described embodiment and the following modifications can be combined as long as the combined modifications remain technically consistent with each other.

In the battery electric vehicle 100, as shown in Fig. 1, the driver's seat 12 is disposed on the left side in Fig. 1. In the battery electric vehicle 100, as shown in Fig. 1, the front passenger seat 13 is disposed on the right side in Fig. 1. The arrangement of the driver's seat 12 and the front passenger seat 13 may be reversed from that in Fig. 1.

In the battery electric vehicle 100 described above, the electric device is the power supply device 18. In the battery electric vehicle 100, the electric device above the front section 16 is not limited to the power supply device 18.

In the battery electric vehicle 100 described above, the rear wheels 11 are drive wheels. The battery electric vehicle 100 may also be a four-wheel-drive vehicle in which, in addition to the rear wheels 11, the front wheels 10 are also driven. The front wheels 10 alone may serve as drive wheels instead of the rear wheels 11.

As shown in Fig. 2, in the battery electric vehicle 100 described above, the upper end of the front section 16 is positioned lower than the upper end of the intermediate section 15. The upper end of the front section 16 may instead be positioned at the same height as the upper end of the intermediate section 15. The upper end of the front section 16 may be positioned higher than the upper end of the intermediate section 15.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A battery electric vehicle (100), comprising:
a battery (14);
a drive wheel configured to be driven by electricity stored in the battery (14);
an electric device configured to operate using the electricity stored in the battery;
a passenger compartment (27); and
a driver's seat (12) and a front passenger seat (13) installed in the passenger compartment (27), wherein
the battery (14) includes:
an intermediate section (15) that houses multiple battery cells (14b) and is disposed between the driver's seat (12) and the front passenger seat (13) so as to extend from a front end to a rear end of the passenger compartment (27);
a front section (16) disposed forward of the intermediate section (15), the front section (16) being filled with multiple battery cells (14b); and
a rear section (17) disposed rearward of the intermediate section (15), the driver's seat (12), and the front passenger seat (13), multiple battery cells (14b) being stacked in the rear section (17) so as to be higher than the intermediate section (15),
the electric device is disposed above the front section (16), and
an upper end of the rear section (17) is positioned higher than the electric device.

2. The battery electric vehicle (100) according to claim 1, wherein
the electric device is a power supply device (18), and
the power supply device (18) is configured to distribute and supply power from the battery (14) to each device connected to the power supply device.

3. The battery electric vehicle (100) according to claim 1 or 2, wherein
the drive wheel is at least one of a front wheel (10) and a rear wheel (11),
each of the front wheel (10) and the rear wheel (11) is provided with a brake caliper (23),
the brake caliper (23) installed on the front wheel (10) is disposed at a rear portion of a front brake disc (21), and
the brake caliper (23) installed on the rear wheel (11) is disposed at a front portion of a rear brake disc (22).

4. The battery electric vehicle (100) according to any one of claims 1 to 3, wherein
the drive wheel is at least one of a front wheel (10) and a rear wheel (11),
the front section (16) is disposed rearward of a rotation axis of the front wheel (10), and
the rear section (17) is disposed forward of a rotation axis of the rear wheel (11).

5. The battery electric vehicle (100) according to any one of claims 1 to 4, wherein
the drive wheel is a rear wheel (11), and
a number of the battery cells (14b) included in the rear section (17) is larger than a number of the battery cells (14b) included in the front section (16).
